# EUROPEAN PATENT SPECIFICATION

(11) **EP 3 984 682 B1**
(45) Date of publication and mention of the grant of the patent: **22.05.2024**
(21) Application number: 20202474.1
(22) Date of filing: 19.10.2020
(51) Int. Cl.: B23K 11/00, H01R 4/02, H01R 43/02, B23K 101/32, B23K 101/38

(54) **DEVICE AND METHOD FOR COMPACT EMBEDDED WIRE WELDING USING A SHAPE-FORMING ELECTRODE**
VORRICHTUNG UND VERFAHREN ZUM KOMPAKTEN EINGEBETTETEN DRAHTSCHWEISSEN MIT EINER FORMBILDENDEN ELEKTRODE
DISPOSITIF ET PROCÉDÉ DE SOUDAGE DE FIL COMPACT INTÉGRÉ À L'AIDE D'UNE ÉLECTRODE DE MISE EN FORME

(43) Date of publication of application: 20.04.2022
(73) Proprietor: TE Connectivity Germany GmbH, 64625 Bensheim (DE); MEAS Ireland (Betatherm) Limited, Galway (IE)
(72) Inventor: YAN, Wenting, 75015 Bretten (DE); WEINERTH, Walter, 67454 Hassloch (DE); MCFADDEN, Sean, Westport (IE)
(74) Representative: Grünecker Patent- und Rechtsanwälte PartG mbB

(56) References cited:
- EP-A1- 3 415 886
- CN-A- 106 785 493
- DE-A1- 2 646 233

## Description

### TECHNICAL FIELD OF THE INVENTION

The present invention relates to resistive welding of electrical cables and/or wires, and more particularly, to a device and method for creating a joint between electrical wires of different cross-sections and/or made of dissimilar materials, such as between multi-strand cables and solid core electrical wires, by resistance welding.

### BACKGROUND OF THE INVENTION

Resistance welding is commonly used for electrically interconnecting electrical cables and/or wires in a wide range of applications. In particular, electric cables/wires made of different materials or sizes are often interconnected by resistance welding, such as for e.g. in automotive applications where the thin wiring of sensor devices needs to be electrically connected to thicker cables of on-board interfaces.

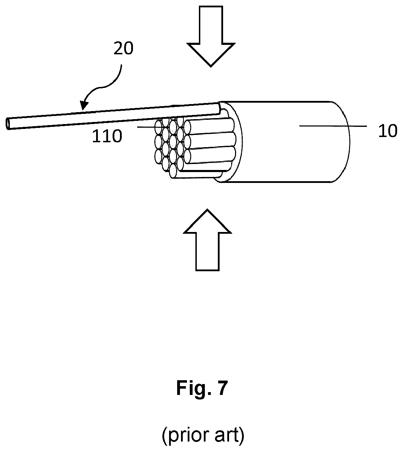

In the conventional resistance welding technique for creating a welded joint, two electrical cables and/or wires are disposed in an overlapping manner between welding electrodes which will apply a welding current sufficient to generate heat at the overlapping region (see Fig. 7). The generated heat should cause an at least partial melting of the overlapping wires at the contact region, thereby forming the welded joint. The welding electrodes are in general supplied with an appropriate welding current pulse using a welding power supply that allows controlling the current pulse depending on several parameters, such as material(s) and dimensions of the metallic components to be welded, and the intended welding quality. In order to improve the quality of the welded junction, the welding electrodes may apply a slight compression to the wires to be welded for reducing the contact resistance at the overlapping surfaces during the welding process.

However, in spite of a fine control of the welding parameters being possible, in general the quality of welded joints formed between a wire that is simply disposed on top of a much larger cable remains poor in situations where there is a significant difference between the cross-sections and/or materials of the wires to be welded. This is partially due to the difficulty in achieving a good relative positioning and contact of a thin wire over a cable of a much larger cross-section during the welding process, which results in several adverse effects on the mechanical strength and quality of the welding joint. For instance, the large variance in the relative positioning between wires leads to significant variations in the contact resistance between their contacting surfaces and, therefore, to poor melting of the respective metals at each side of the contact interface. This also leads to an intermetallic compound, which is necessary for ensuring a good quality of the welding, being created only at the (poorly) contacting surfaces.

The mechanical strength of welded joints obtained by conventional resistance welding is also generally characterized by a low peel force due to the poor encirclement of the interconnected wires, which implies welding longer segments in order to increase the joint mechanical stability. This is the case of welded joints obtained by hot staking of cooper strands with a Dumet wire of a Dumet-based thermistor, where the Dumet wire has only 30% of the cooper cable circumference. In addition, the oxidation of the Dumet wire and the fact that it cannot be pressed against the cooper stranded wire pose additional difficulties in obtaining a welded joint of good quality.

Other techniques used for interconnecting electrical cables and/or wires, such as crimping, have been considered for avoiding the above-mentioned shortcomings of conventional resistance welding. However, the space usually available for interconnecting wires in many applications, such as automotive applications, is in general limited which makes the use of crimping difficult or even impossible. Moreover, resistance welding is a simple and cost effective technique.

### Several welding techniques have been proposed

DE 2 646 233 A1 describes a welding apparatus for welding together lengths of electric wire or cable and characterized by a first block having a groove with parallel walls and a depth greater than its width, a second block having a rib which is sized to fit in the groove, means for bringing the two blocks together and forcing them together so that the rib engages the groove so that parts of the lengths of electrical wire or cable placed in the groove and pressed between the top of the rib and the bottom of the groove, and by means for heating the parts of the wire or cable in the groove to fuse them together.

EP 3 415 886 A1 proposes a joining structure for stably achieving high joining strength in a sensor element in which the lead wire and the stranded wire are welded.

CN 106 785 493 A relates to a connection method for a micro-diameter electrode pin line and a stranded conductor. The connection method comprises the following steps that the stranded conductor is placed in a groove electrode tip, the micro-diameter electrode pin line is placed above the stranded conductor, an electrode tip pressing position is adjusted, welding pressure parameters of a resistance welding machine are provided, and the micro-diameter electrode pin line and the stranded conductor are pressed and shaped; welding parameters of the resistance welding machine are provided, the pressed and shaped micro-diameter electrode pin line and the stranded conductor are welded, wherein a pressing electrode tip is taken as a top electrode of the resistance welding machine, and the groove electrode tip is taken as a bottom electrode of the resistance welding machine.

Thus, there is a need for a welding technique that allows forming welded electrical junctions of improved quality and mechanical stability, and in particular, for applications where electrical cables and/or wires having a significant disparity in the respective cross-sections and/or composing materials have to be interconnected in a simple, cost effective and reliable manner.

### SUMMARY OF THE INVENTION

The present invention has been made in view of the shortcomings and disadvantages of the prior art, and an object thereof is to provide a device for compact embedded wire welding and a method thereof which allows to interconnect electrical cables and/or wires, namely, having a significant disparity in their respective cross-sections and/or composing materials, in a simple, cost effective and reliable manner.

This object is solved by the subject matter of the independent claims. Advantageous embodiments of the present invention are subject matter of the dependent claims.

According to the present invention, it is provided an apparatus for compact embedded-wire welding of electrical wires according to claim 1.

According to a further development, the set of pre-welding electrodes comprise a base electrode adapted to be positioned on a side of the first segment opposed to the contact face of the shape-forming electrode, the base electrode has a flat compression face adapted to compress the first segment against the shape-forming structure at the contact face of the shape-forming electrode.

According to a further development, the apparatus further comprises a set of welding electrodes adapted to apply a welding potential difference between a first position (P1) and a second position (P2) along a longitudinal length of the first segment for welding the second segment accommodated in the reentrance of the pre-welding shaped cross-section of the first segment; wherein the set of welding electrodes comprises a first sub-set of welding electrodes adapted to be arranged around the cross-section of the first segment at the first position (P1) for applying a first welding potential and to change the shape of the cross-section at the first position (P1) into a predetermined welding shape via compression.

According to a further development, the first sub-set of welding electrodes includes a base welding electrode and one or more compression welding electrodes adapted to be arranged around the cross-section at the first position (P1) along respective radial directions, wherein the base welding electrode is adapted to load the first segment thereon and the one or more compression welding electrodes are movable along the respective radial directions so as to apply inward pressure onto the first segment cross-section against the base welding electrode and cause said reentrance in the pre-welding shape to close, at least partially, around the second segment.

According to a further development, the first sub-set of welding electrodes comprises two compression welding electrodes, and the two compression welding electrodes and the base welding electrode are adapted to be arranged with an angular separation of 120° around the cross-section of the first segment such as to change the shape of the first segment cross-section into a triangular welding shape.

According to a further development, the base welding electrode and/or the compression electrodes have contact faces for apply inward pressure onto the first segment cross-section that are substantially flat surfaces transverse to the respective radial directions.

According to a further development, the set of welding electrodes further comprises a second subset of welding electrodes adapted to be arranged around the cross-section of the first segment at the second position (P2) for applying a second welding potential and to change the shape of the cross-section at the second position (P2) into the predetermined welding shape via compression.

According to a further development, the second sub-set of welding electrodes further comprises a base welding electrode adapted to load the first segment thereon and one or more compression welding electrodes which are movable along respective radial directions so as to apply inward pressure onto the first segment cross-section against the base welding electrode and cause said reentrance in the pre-welding shape to close, at least partially, around the second segment, and/or wherein the welding electrodes forming the second sub-set are identical in number and shape to the welding electrodes of the first sub-set.

According to a further development, the set of welding electrodes further comprises a set of insulating elements adapted to be arranged around a cross-section of the first segment at an intermediated position (P3) between the first and second sub-sets of welding electrodes for electrical insulation, wherein the set of insulating elements is adapted to change the shape of the first segment cross-section at the intermediate position (P3) into the predetermined welding shape via compression, and/or wherein the insulating elements are identical in number and shape to the welding electrodes of the first sub-set.

According to a further development, the first wire is a multi-filament stranded wire, and/or the second wire is a Dumet wire or an electrical wire of a single solid core, and/or the cross-section of the second segment of the second wire is smaller than the cross-section of the first segment of the first wire; and/or said protrusion has a height which is twice the diameter of the second wire and/or a width which is equal to or larger than the diameter of the second wire.

According to the present invention, it is further provided a method of compact embedded-wire welding of electrical wires, the method comprising steps of: forming, via compression, a pre-welding shape on a cross-section of a first segment of a first wire that includes a reentrance for accommodating a second segment of a second wire to be welded to the first wire; accommodating said second segment in said reentrance of the pre-welding shape in an alignment with the first second; applying inward pressure on the pre-shaped cross-section of the first segment so as to change the pre-welding shape of the first segment cross-section into a predetermined welding shape; and applying a welding potential difference between a first position (P1) and a second position (P2) along a longitudinal length of the first segment for welding the first segment to the second segment.

According to a further development, the step of forming, via compression, the pre-welding shape on a cross-section of a first segment includes forming said pre-welding shape along the longitudinal length of the first segment between the first and second positions; and/or wherein the step of applying inward pressure on the pre-shaped cross-section of the first segment to change the cross-section shape into the welding shape is performed at least at the first and/or second positions, and wherein left and right borders of the reentrance formed in the pre-welding shape are made to surround, at least partially, a cross-section of the second segment positioned in the reentrance of the pre-welding shape to obtain the welding shape.

According to a further development, the method further comprises loading the first segment in a set of pre-welding shape-forming electrodes of an apparatus according to the invention and performing said step of forming the pre-welding shape of the cross-section of the first segment using said set of pre-welding shape-forming electrodes; and/or loading the first segment with the pre-welding shaped cross-section and the second segment accommodated in the reentrance of the pre-welding shape in a set of welding electrodes of an apparatus according to the invention, and performing said step of applying inward pressure onto the pre-welding shaped cross-section of the first segment for changing the shape of said cross-section into the welding shape, and supplying said welding potential difference between the first and second positions along the longitudinal length of the first segment using the set of welding electrodes.

The accompanying drawings are incorporated into and form a part of the specification for the purpose of explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more detailed description of the invention as illustrated in the accompanying drawings, in which:

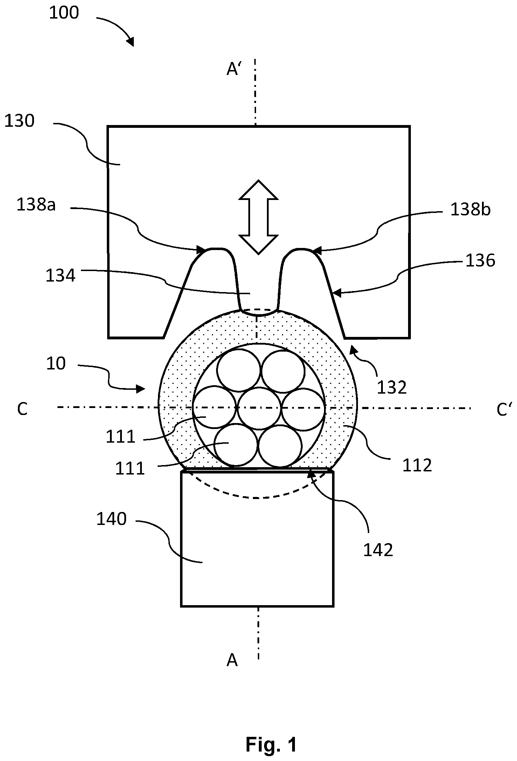

Fig. 1 is a schematic cross-sectional view of a set of pre-welding shape-forming electrodes according to an embodiment of the present invention that are used for pre-shaping the cross-section of a first segment of a first wire (e.g. a multi-stranded cable) to be welded to a second wire (e.g. a Dumet wire) with a predetermined pre-welding shape;

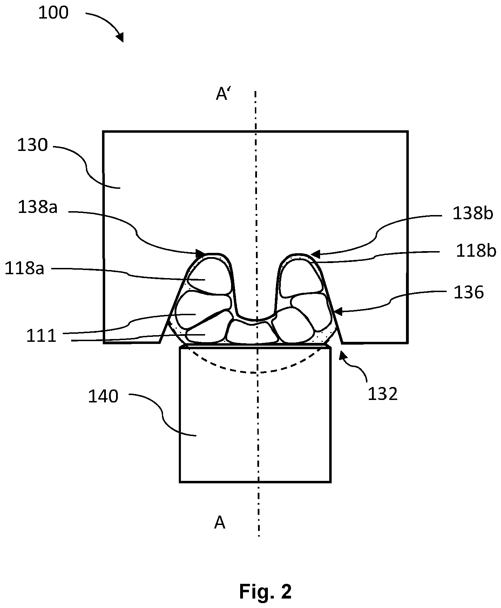

Fig. 2 is a further schematic cross-sectional view of the set of pre-welding shape-forming electrodes show in in Fig. 1 when applying a compression across a cross-section of the first segment to acquire the pre-welding shape with a reentrance for accommodating a segment of the second wire;

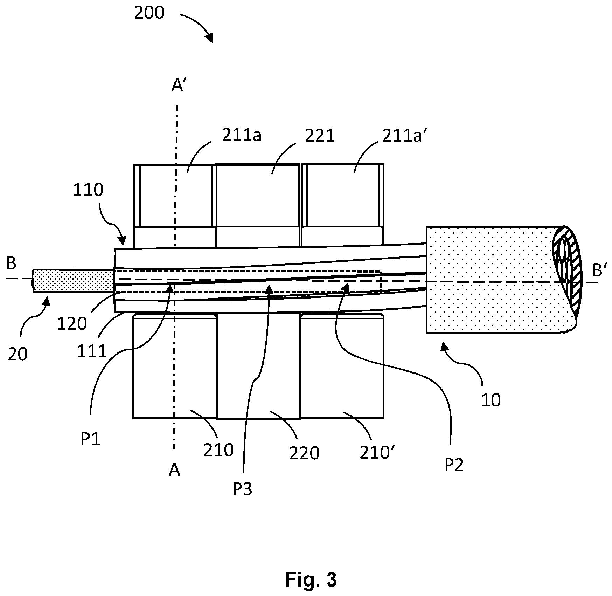

Fig. 3 is a schematic side view (viewed along the longitudinal direction BB' of the multi-stranded cable) depicting a set of welding electrodes for performing a welding process with compactation according to an embodiment; the first segment of the multi-stranded cable having the pre-welding shape shown in Fig. 2 and the second segment of the Dumet positioned in the reentrance of the pre-welding shape are both aligned between the welding electrodes set;

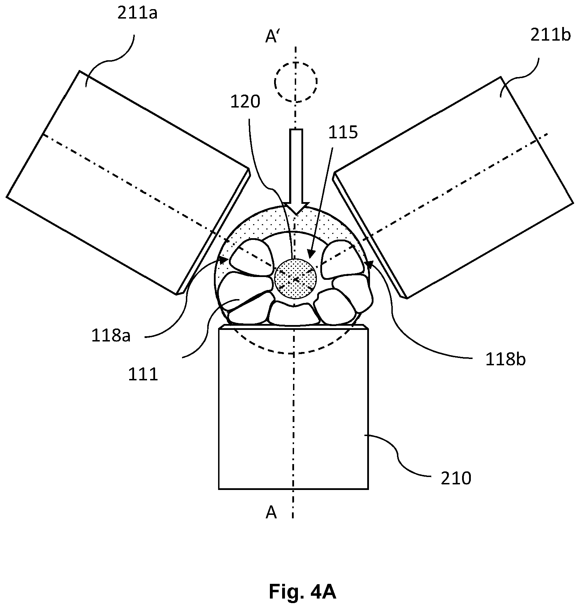

Fig. **4A** is a schematic cross-sectional view (taken along the direction AA' in Fig. 3) of a first subset of welding electrodes from the welding electrodes set shown in Fig. 3 and which are arranged at a position P1 about the pre-shaped first segment with the inserted second segment;

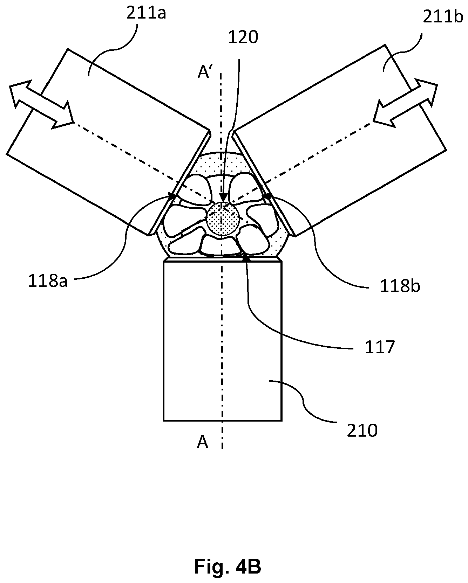

Fig. 4B is a schematic cross-sectional view (taken along the direction AA') of the first sub-set of welding electrodes shown in Fig. 4A during a stage where pressure is applied onto the first segment for enclosing the second segment and changing the first segment cross-section into a desired welding shape (the arrows represent the movement direction of the welding electrodes);

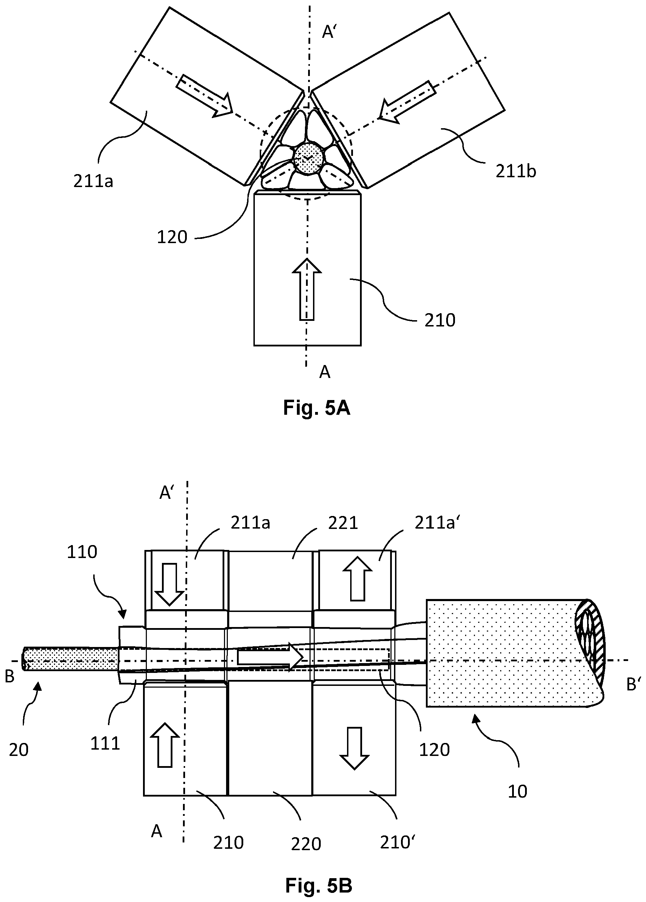

Fig. 5A is a schematic cross-sectional view (taken along the direction AA') depicting the first subset of welding electrodes shown in Fig. 4B during a process of welding with compactation in which the cross-section of first segment has been fully compacted into the welding shape and a welding current is applied by each welding electrode of the first sub-set (the direction of the welding current supplied to the first segment is represented by the arrows in Fig. 5A);
Fig. 5B is a schematic side view (along the longitudinal direction BB') depicting the set of welding electrodes and the first segment with the inserted second segment during the welding process with compactation illustrated in Fig. 5A (the direction of the welding current supplied to the first segment is represented by the arrows in Fig. 5B);

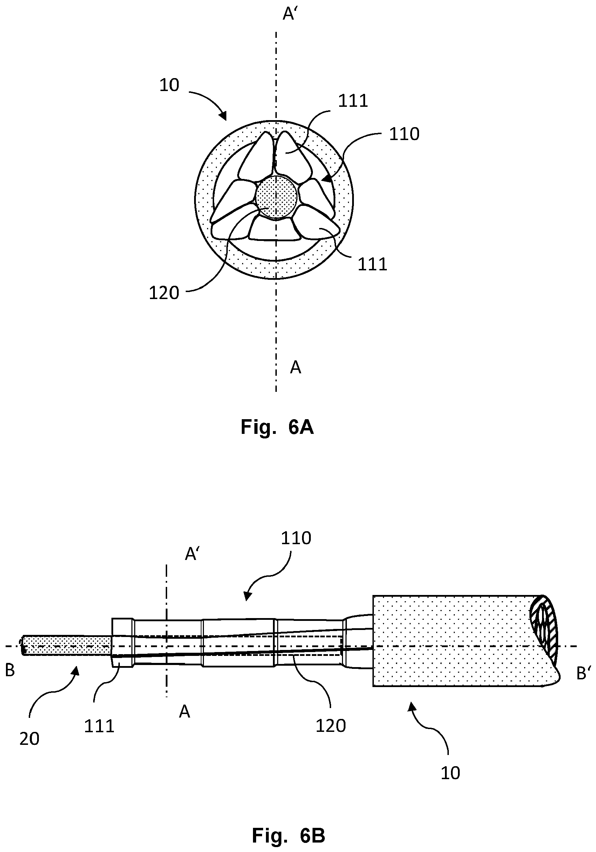

Fig. 6A shows schematically a cross-section of the first and second segments at the end of the welding process with compactation performed with the welding electrodes illustrated in Fig. 3;
**Fig. 6B** shows schematically a side view (along the longitudinal direction BB') of first and second segments shown in Fig. 6A at the end of the welding process with compactation; and
Fig. 7 illustrates schematically the relative disposition between a solid core, electrical wire and a multi-stranded cable, prior to welding, as used with a conventional resistance welding technique.

### DETAILED DESCRIPTION OF THE INVENTION

The present invention will now be more fully described hereinafter with reference to the accompanying drawings, in which exemplary embodiments of the invention are shown. The present invention may, however, be embodied in many different forms and should not be construed as limited to the embodiments set forth herein. Rather, these embodiments are provided so that the disclosure will be thorough and complete, and will fully convey the scope of the invention to those skilled in the art. Like numbers refer to like elements throughout.

As mentioned above, one of the problems associated with the conventional technique for resistance welding of a multi-strand cable 10 to a single core wire 20 of a significantly smaller diameter is the difficulty in maintaining the position of the thinner wire 20 during welding, as illustrated in Fig. 7. In addition, due the large diameter discrepancy, the contact surfaces with the respective positive and negative welding electrodes, as represented by the arrows in Fig. 7, are not the same. This means that, when applying a welding current across the overlapped multi-strand cable 10 and solid core wire 20, there will be significant differences in the heat generated at each contact surface and consequently, the quality of the resultant joint will not be good.

A concept underlying a method of compact embedded wire welding of the present invention lies in improving the quality and stability of welded joints, namely, between multi-stranded cables and single core wires, by initially performing a pre-welding shaping process, in which a cross-section of a first segment of a first wire (normally the larger diameter wire) is compacted into a predetermined pre-welding shape that forms a reentrance for placing a second segment of a second wire to be welded to the first wire in a precise and stable position. In a subsequent step, the second segment is positioned in the reentrance of the pre-shaped cross-section of the first segment for initiating a welding process. During the welding process, the left and right borders of the reentrance formed in the pre-shaped cross-section of the first segment are first brought together such as to encircle the second segment cross-section, entirely or at least partially. The encirclement of the second segment, which has a smaller diameter, by the larger cable allows to achieve a good contact surface between both segments as well as between the larger cable and the welding electrodes, and therefore, a homogeneous distribution of welding currents across the first segment may be achieved during the subsequent welding process. This facilitates the formation of an intermetallic compound and improves melting of the first segment, which results in an improved quality and mechanical stability of the resultant joint.

Thus, the present invention makes possible to reduce or completely eliminate the negative effects of the conventional technique that are associated with the large positional variance and/or the discrepancy in the melting temperatures between the cables/wires to be welded by providing a welding technique that includes performing a pre-welding shaping process on one of the wires/cable to be welded, preferably on the wire/cable having the larger cross section and/or which is easier to deform, prior to welding, such as to create a reentrance along a segment of the first wire for accurately position the second wire to be welded and attain similar contact surfaces and welding current densities during the final welding process.

Figs. 1 and 2 illustrate a set of pre-welding electrodes 100 for performing a shape-forming process on a first segment 110 of a first wire 10 prior to welding the first wire 10 to a second wire 20 of smaller diameter. During the shape-forming process, a cross-section of the first segment 110 is shaped with a predetermined pre-welding shape that includes a reentrance 115 for subsequently accommodating a second segment 120 of the second wire 20 (see Fig. 2) in an aligned position relative to the first segment 110. In the illustrated configuration, the first wire 10 is a multi-strand cable with a circular cross-section before the shape-forming process, such as the multi-strand cable shown in Fig. 7. Multi-stranded cables are generally formed by a bundle of thin electrical wires, which are grouped together to form a cable of larger cross-section. Such multi-stranded cables are very flexible and can be easily deformed or compacted, prior to welding, into different shapes that are more favorable for positioning and maintaining the alignment of the second wire 20 of smaller diameter during a subsequent resistance welding process. The second wire 20 is preferably a single wire with a solid core, such as a Dumet wire. However, the second wire 20 may also be a multi-stranded wire of a smaller diameter than the first wire 10. The set of pre-welding electrodes 100 includes a shape-forming electrode 130 having a contact face 132 which is provided with a shape-forming structure adapted to transfer the desired pre-welding shape to the cross-section of the first segment 110, which in general has a circular cross-section such as shown in Fig. 1. The set of pre-welding electrodes 100 may also include a base electrode 140, onto which the first segment 110 of the multi-stranded cable 10 may be loaded prior to the shape-forming process and which is used for compressing the loaded multi-stranded cable 10 against the shape-forming electrode 130.

The desired pre-welding shape to be formed in the first segment 110 includes a longitudinal depression or reentrance 115 that extends on the outer surface of the first segment 110 along a suitable length for subsequently accommodating and maintaining an end segment 120 of the second wire 20 to be welded to the first wire 10 in an accurate and stable position relative to the first segment 110 during a resistance welding process.

In order to form the reentrance 115 along the first wire segment 110 for positioning the second wire segment 120, the shape-forming electrode 130 is provided with a protrusion 134 on a contact face 132 of the shape-forming electrode 130 that will come into contact with the first segment 110 during the pre-welding, shape-forming process. When the first segment 110 is pressed against the shape-forming electrode 130, for e.g. via the base electrode 140 positioned at the side opposed to the shape-forming electrode 130, the cross-section of the first segment 110 placed between the pre-welding electrodes 130, 140 is forced to bend from the left and right sides with respect to the protrusion 134, thereby forming a longitudinal reentrance or channel 115 along the outer surface of the first segment 110 for accommodating the second wire segment 120. The shape-forming structure at the contact face 132 of the shape-forming electrode 130 is preferably provided with a cavity or groove 136, on which the protrusion 134 is provided at an intermediate position on the bottom of the groove 136, so that the shape-forming structure is a W-shaped cavity suitable to receive the portions of the first segment 110 that are bent from the left and right sides of the elevation 134 under compression from the base electrode 140. As a result, the bent portions of first segment 110 may be easily molded into the pre-welding shape formed by the protrusion 134 and surfaces 138a, 138b of the W-shaped cavity and the wire strands 111 of the first segment 110 compacted against each other to form parallel ridges 115a and 115b on each side of the reentrance 115. The parallel ridges 115a and 115b not only facilitate the positioning of the second wire segment 120 onto the first segment 110 prior to welding but are also used for forming a welding shape for the subsequent resistance welding process, as it will be described later.

In the configuration illustrated in Figs. 1 - 2, the contact face 132 has a cavity with W-shaped cross-section formed by the rounded surfaces 138a, 138b at the left and right sides of the protrusion 134. Moreover, the shape-forming electrode 130 and the W-shaped cavity on the contact face 132 preferably have a sufficient length (i.e. in the longitudinal direction BB' of the first segment 110 which is transverse to the direction AA' depicted in Figs. 1 - 2) for forming a reentrance 115 along the first segment 110 with a length sufficient for inserting the second segment 120. On the other hand, the shape-forming structure in the contact face 132 may be designed with a profile other than the W-shape illustrated in Figs. 1 - 2, depending on the desired pre-welding shape, to be transferred into the first segment cross-section by compactation against the shape-forming structure as described above.

The dimensions and relative size of the protrusion or elongation 134 and shape-forming groove 136 are selected depending on the diameter of the first and second wires 10, 20 to be welded. For instance, the protrusion 134 may have a height with respect to the bottom surfaces 138a, 138b of the groove 136 (i.e. in the AA' direction) which is twice the diameter of the second wire 20. This allows forming parallel ridges 115a, 115b of a sufficient height for encircling the second wire 20 during the subsequent welding process, as it will be described later. The width of the elongation 134 along the direction CC' may be selected to be slightly larger that the diameter of the second wire 20, such that the reentrance 115 formed during the pre-welding process will have a sufficient overture for accommodating the second wire 20. In the case of a Dumet wire, an elongation width equal to the diameter of the Dumet wire + 0.05 mm may be used. The depth of the shape-forming groove 136, i.e. the depth of the surfaces 138a, 138b with respect to the edge of the contact face 132 of the shape-forming electrode 130 is preferably equal to 75% of the diameter of the first wire 10.

The first segment 110 may be compressed against the shape-forming structure by moving the shape-forming electrode 130 against the first segment 110 loaded into the base electrode 140 (or reversibly moving the base electrode 140 towards the shape-forming electrode 130) and applying a compression force sufficient for deforming and compacting the first segment cross-section into the shape-forming structure for acquiring the desired pre-welding shape, as depicted in Fig. 2. The base electrode 140 then also functions as a compression electrode. The compression electrode 140 is preferably designed such that the face that comes into contact with the first segment 110 during the pre-welding, shape-forming process, i.e. the compression face 142 shown in Fig. 1, has a flat surface oriented in a direction transverse to the direction AA' along which pressure is applied against the shape-forming electrode 130. The area of the compression face 142 is dimensioned so as to be allow the compression electrode 140 to enter partially through the upward overture of the shape forming groove 136 without touching the shape-forming electrode 130, thereby allowing a full compactation of the first segment cross-section against the bottom 138a, 138b of the groove 136 and an integral transfer of the desired pre-welding shape into the first segment 110 without the compression electrode 140 entering into electrical contact with the shape-forming electrode 130.

In the embodiment shown in Figs. 1 - 2, the compression electrode 140 has a flat surface 142 oriented in a direction transverse to the direction of applying pressure against the shape-forming electrode 130. Alternatively, a compression electrode having a compression face with a profile that complements the shape of the groove 136 on the shape-forming electrode 130 may be used so as to distribute the pressure applied by the compression electrode more evenly across the diameter of the first segment 110 and/or improve the compactation of the multi-stranded wire 10.

The shape-forming electrode 130 and the base electrode 140 (or vice-versa) may be made of an electrically conductive material so as to additionally function as anode and cathode electrodes, respectively. In this case, during the pre-welding shape-forming process, an electrical potential difference may be applied by the shape-forming electrode 130 and the base electrode 140 across the cross-section of the first segment 110 placed in-between so as to cause a current of a suitable intensity to pass across the first segment cross-section for softening the first segment strands 111 and consequently, improve flexibility of the first segment 110 during compactation and achieve a better definition and stability of the final pre-welding shape, namely, of the ridges 118a, 118b.

After the desired pre-welding shape has been transferred into the first segment 110, the pre-shaped first segment 110 may be loaded into a set of welding electrodes 200 and the second wire segment 120 securely positioned in the reentrance 115 of the pre-welding shape for initiating the welding process, as it will be described in the following.

Fig. 3 shows schematically a side view (along the longitudinal direction BB') of a set of welding electrodes 200 for performing shaping of the first segment 110 with the embedded second segment 120 and resistively welding the first segment 110 to the second segment 120 according to an embodiment.

The set of welding electrodes 200 is configured for applying an electrical potential difference between a first position P1 and a second position P2 along the longitudinal direction BB' of the first segment 110 for welding the first segment 110 to the second segment 120 arranged in the reentrance 115 of the pre-welding shape, for e.g. after applying the pre-welding, shape-forming process described above.

The set of welding electrodes 200 comprises a first sub-set of welding electrodes 210, 211a, 211b to be arranged around a cross-section of the first segment 110 at the first position P1 for applying a first welding potential to the first segment 110. A second subset of welding electrodes 210', 211a', 211b', preferably in a number and shape identical to the electrodes forming the first subset, may be arranged around a cross-section of the first segment 110 at the second position P2, which is at a suitable distance from the first position P1, for applying a second welding potential, different from the first potential, and therefore establish an electrical potential difference along a given longitudinal length of the first segment 110. The distance between the positions P1 and P2 may be selected depending on the length desired for the welded joint and therefore, may vary depending on the specific application, such as type of materials to be welded and the cross-sections of the first and second wires. In addition, the set of welding electrodes 200 may further comprise a set of insulating elements (for e.g. elements 220, 221' in Fig. 3) to be arranged around a cross-section of the first segment 110 and at an intermediated position P3 between the first and second positions P1, P2 for electrically insulating the first subset of welding electrodes 210, 211a, 211b from the second subset 210', 211a', 211b'. The welding currents are therefore supplied to the first segment 110 by the first and second subsets of welding electrodes located at the first and second positions P1 and P2, respectively.

In addition, one or both of the first subset of welding electrodes 210, 211a, 211b and the second subset 210', 211a', 211b' is preferably configured to further change the shape of the first segment cross-section placed in-between into a predetermined welding shape, after the second segment 120 has been accommodated in the reentrance 115 and prior (or in simultaneous) to the application of the welding potential difference. Such welding shape is selected such as to improve the contact resistance between the first segment 110, the second segment 120 and the respective welding electrodes 200 and therefore, to achieve a more homogeneous distribution of welding current densities, as it will be now described with reference to Figs. 4A and 4B.Fig. 4A shows schematically a cross-sectional view of the first subset of welding electrodes arranged around the cross-section of the first segment 110 at the first position P1 (i.e. more specifically, covering a region of the first segment 110 about the first position P1). The first subset of welding electrodes includes a base welding electrode 210 for loading the pre-shaped first segment 110 thereon and two compression welding electrodes 211a, 211b that are arranged at specific radial directions on a side of the first segment 110 opposed to the base welding electrode 210 for applying inward pressure on specific locations of the first segment cross-section. As depicted in Fig. 4B, the compression welding electrodes 211a, 211b can be moved towards the base electrode 210, for e.g. along the radial directions indicated by the arrows in Fig. 4B, for exerting pressure onto the first segment 110 loaded thereon. Thus, after the second segment 120 has been accommodated in the reentrance 115 provided for this effect in the pre-welding shaped first segment 110, inward pressure ca be applied on the pre-shaped cross-section of the first segment 110 by the compression welding electrodes 211a, 211b so as to bring the inner surface of the reentrance 115 into closer contact with the second segment 120 and compact the strands of the first segment 110 around the second segment 120 into a welding shape, which prepares the first segment cross-section for the subsequent application of welding currents.

For instance, as illustrated in Fig. 4B, the compression welding electrodes 211a, 211b and the base welding electrode 210 may be positioned with an angular separation of 120° around the longitudinal direction BB' such that the base 117 of the pre-welding shaped first segment 110 is supported on the base welding electrode 210 and the compression welding electrodes 211a, 211b respectively apply a radial pressure on the parallel ridges 118a, 118b, thereby causing the respective ridges 118a, 118b to bend towards the second segment 120 placed in the reentrance 115. Moreover, the faces of the compression welding electrodes 211a, 211b and the base welding electrode 210 that come into contact with the first segment 110 are preferably planar so that the resulting welding shape of the first segment cross-section 110 is approximately a triangular shape with regular surfaces forming a 60° angle in-between. In this configuration, the second segment 120 accommodated in the reentrance 115 becomes fully surrounded by the bended ridges 118a, 118b and as a result, the contact between the first and second segments 110 and 120 is significantly improved. In addition, the regular, planar surfaces of the triangular welding shape allow for an even distribution of welding current densities across the interface with the welding electrodes during the subsequent welding process, which results in a more homogeneous generation of heat and consequently, on welded joints with improved quality.

In order to achieve the same benefits provided by the first subset of welding electrodes 210, 211a, and 211b in terms of homogeneous distribution of welding current densities and improved welding quality over a given longitudinal length of the first segment 110, the second subset of welding electrodes to be arranged around the cross-section of the first segment 110 at the second position P2 may be provided in number and shape identical to the first subset of welding electrodes 210, 211a, and 211b. Namely, the second subset of welding electrodes may also include a base welding electrode 210' for supporting the first segment 110 at a region about the second position P2 and compression welding electrodes 211a', 211b', similar to the compression welding electrodes 211a, 211b of the first subset, and which are arranged along radial directions parallel to the radial directions of the compression welding electrodes 211a, 211b such as to apply inward pressure on the parallel ridges 118a, 118b of the pre-welding shaped first segment 110 held by second subset.

After the cross-section of the first segment 110 has been modified into the desired welding shape and compacted around the second segment 120, welding currents may be applied via each of the welding electrodes 210, 211a, 211b of the first subset at region P1 and the welding electrodes 210', 211a', 211b' of the second subset at the region P2, such as depicted by the direction of the arrows in Figs. 5A and 5B. As it can be seen from Fig. 5A, the triangular cross-section of the first segment 110 and the flat contact faces of the welding electrodes 210, 211a, 211b allow for a better electrical contact during the application of the welding currents than in the conventional techniques, and consequently, makes possible to reach an homogeneous distribution of the heat generated by the welding currents at the contact surfaces. A similar effect is achieved with the second subset of welding electrodes 210', 211a', 211" located at the region P2.

The set of insulating elements 220, 221a, 221b is also preferably provided in number and shape similar to the first and/or second sub-set of electrodes described above. For instance, the insulating elements set may include a base element 220 for holding the first segment 110 at the intermediate region P3 between the first and second regions of the first segment 110 held by the first and second subsets of welding electrodes, and include compression elements 221a, 221b to be arranged along radial directions in parallel to the radial directions of the compression electrodes of the first and/or second subsets of welding electrodes for applying inward pressure on the first segment 110 at the intermediate region along parallel radial directions. Consequently, the cross-section of first segment 110 with the embedded second segment 120 can be also modified to the predetermined welding shape at the intermediate region P3, so that the first segment 110 with the embedded second segment 120 has a regular cross-section that remains substantially constant along the entire longitudinal length of the first segment 110 between the first and second positions P1 and P2. In addition, a stable and durable welded joint can be obtained along the entire length between the first and second positions P1 and P2 of the first segment 110 because the heat generated by the welding current supplied across the first segment 110 is sufficient to achieve welding between the first and second segments 110, 120 at the intermediate region. As a result, a compact welded joint of the first and second segments of an improved quality may be obtain along the entire length between regions P1 and P2.

The design of the set of welding electrodes 200 described above thus eliminates the shortcoming presented by the conventional welding technique shown in Fig. 7, where the difference in the contact surfaces between the first wire 10 and the second wire 20 leads to welding currents of different densities being generated at the wires interface with a negative impact on the quality of the final joint.

The intensity of the welding current to be applied is selected such as to cause melting of the multi-stranded wires of the first segment 110 loaded between the welding electrodes 200. In addition, in order to promote welding to the second segment 120, the first and/or second subsets of welding electrodes may apply a controlled pressure onto the first segment 110, similar or different to the inward pressure used for modifying the shape of the first segment cross-section into the welding shape, while the welding current is being supplied. However, since it is not desirable to have a very low cross-section resistance for obtaining a welded joint with good quality because the amount of heat generated by the supplied welding current depends on the resistance across the first segment 110. Since this resistance may decrease considerably under the application of pressure due to the distance between the wires of the multi-stranded cable being reduced, the pressure applied by the first and/or second subsets of welding electrodes onto the first segment 110 may be adjusted such as to achieve a given amount of resistance across the strands of the multi-stranded cable 10 that is sufficient for generating sufficient heat for welding while promoting the contact between the first and second segments 110, 120 to be welded.. The most suitable magnitude of the welding pressure depends on several parameters and the particular application, such as the area of contact, diameter of the wires, wire material, and the like. For instance, a pressure in the order of 100N/mm² may be sufficient for forming a welded interconnection of a sensor wire, such as a Dumet wire, to multi-stranded cables currently used in standard applications.

The configuration of the welding electrodes 200 described above results in a welded joint of the first segment with the embedded second segment 120 that exhibits a triangular cross-section at the end of the welding process, such as illustrated in Figs. 6A and 6B. However, it may be envisaged to use other shapes for the welding electrodes 200 and/or pre-welding, shape-forming electrodes 100 that allow forming a reentrance on the pre-shaped first segment 110 for accurately positioning the second segment 120 and which promotes a full encirclement of the second segment 120 by the first segment 110 prior to the application of the welding currents so as to achieve an homogeneous distribution of welding current densities. For instance, pre-welding, shape-forming electrodes may be provided with a shape-forming structure adapted to provide a pre-welding shape with a semi-hexagonal shape which is then finalized into a hexagonal welding shape by a set of welding electrodes having a suitable number of compression electrodes at respective angular positions for completing the hexagonal shape of the first segment cross section via compression. Therefore, the number and angular positioning of the compression electrodes forming the set of welding electrodes is not limited to the illustrated embodiments and may be selected depending on the specific welding application, such as the desired welding shape, and consequently, differ from the configurations described above.

The set of pre-welding, shaping-forming electrodes 100 and/or the set of welding electrodes 200 according to the principles of the present invention may be used to implement a method of compact embedded wire welding in a line production of welded joints and interconnections, as described hereinafter for the case of a compact, embedded welded joint of a multi-stranded cable 10 to a single core wire, such as Dumet wire 20.

Firstly, the multi-stranded cable 10 is driven to a first station (pre-welding compacting station) to perform the pre-welding shape-forming process during which a certain length of the multi-stranded cable 10 (first segment 110) is loaded into the set of pre-welding electrodes 100 for transferring the desired pre-welding shape into the cross-section of the first segment 110 by compactation.

Secondly, after performing the pre-welding shape-forming process, the pre-shaped first segment 110 of the multi-stranded cable 10 may be automatically moved to the next station, i.e. a welding station, for optimizing the contact between the first segment 110 with the second segment 120 of a Dumet wire to be welded and perform the subsequent resistive welding. In this case, the pre-shaped first segment 110 is loaded into the base welding electrode(s) of the set of welding electrodes 200 and the second segment 120 of the Dumet wire 20 positioned in the reentrance 115 of the first segment 110 that was formed during the pre-welding shape-forming process, as shown in Fig. 4A. Alternatively, the first segment 110 may be loaded onto the base welding electrode(s) with the second segment 120 already positioned in the reentrance 115. The welding process may then be initiated by first bringing the compression welding electrodes 211a, 211b of the first subset and/or the compression welding electrodes 211a', 211b' of the second subset into contact with the first segment 110, for closing the borders of the reentrance 115 around the second segment 120 and compact the strands of the first segment 110 into a given welding shape, such as the triangular cross-section depicted in Fig. 5A. A suitable welding current may then be supplied by the same welding electrodes that produced the compactation of the first segment 110 into the welding shape. For example, welding currents may be supplied from each face of the triangular cross-section so as to achieve an homogeneous distribution of welding heat that will melt the wires of the first segment 110 and form a welded joint with the embedded second segment 120. A controlled pressure may be applied by the set of welding electrodes onto the first segment cross-section while the welding currents are supplied in order to maintain the encirclement of the second segment 120 by the ridges 118a, 118b while ensuring sufficient resistance across the first segment wires for generating the required welding heat.

The full insertion of the thinner wire segment 120 into the larger diameter cable 110 prior to welding allows avoiding several problems that arise when different materials have to be welded. Such problems are in general associated with differences between the respective melting temperatures, material characteristics, and behavior of each wire material during a resistive welding process. For instance, in order to produce a satisfactory weld between copper and another metallic material, such as a nickel sheet, it is necessary to heat the area to be welded to a temperature sufficiently high so as to produce fusion or an alloying of the copper and the metal of the other metallic material. Copper can alloy with many metals and alloys, for e.g. nickel alloys. Nickel alloys (such as Ni-Fe) usually present welding temperatures higher than 1300 °C at low applied stress, while the melting temperature of cooper is typically around 1100 °C. Copper alloys can also be welded, although each alloy will weld differently from another. Nevertheless, as long as the material to be welded can create an intermetallic alloy, it can be surrounded with cooper and welded thereto. In the case of a Dumet-based thermistor, the Dumet wire has a core made of an alloy of nickel-ferrum with a high welding temperature. However, it is possible to obtain a good welded joint between the Dumet wire and a cooper multi-stranded cable using the method of the present invention because the strands of copper wires will be placed around the Dumet wire prior to the application of the welding current. Thus, a further advantage of the present invention lies in that it does not require additional materials, such as solder and/or cramping, in order to produce a welded junction between dissimilar materials.

It is also known that the bi-metal composition of Dumet wires, where the nickel-iron core is surrounded by a copper cladding, poses several problems in the choice of materials for the respective welding electrodes. For instance, it has been reported that electrodes made of molybdenum or tungsten generally help to heat the copper cladding of the Dumet wire. However, these electrodes materials present the negative effect of sticking to the electrically resistive nickel-iron core once the electrode tip penetrates the copper cladding. It has also been reported that electrode sticking may be minimized by applying a negative polarity to the electrode that contacts the Dumet wire. However, restrictions on the polarity of the welding electrodes reduces flexibility of the overall welding process, since the positioning of the Dumet wire with respect to the welding electrodes must then be taken into account. Electrode sticking may also occur in the overlapping configuration of Fig. 7 if the wire segment 20 of higher resistivity melts well before the other cable segment 10 reaches a temperature sufficient for forming the welded junction.

Electrode sticking is a severe problem because it may disrupt or weaken the welded junction when the welding electrodes are removed at the end of the welding process. The full insertion of the thinner wire segment 120 into the larger diameter cable bundle 110 prior to welding, according to the principles of the present invention, eliminates the problems of electrode sticking described above, because the welding electrodes do not enter into direct contact with the wire segment 120 having the smaller cross-section and/or higher electrical resistivity, such as the Dumet wire. Moreover, since the welding potential is directly applied onto the compacted Cu bundle 110 (i.e. the material of lower electrical resistivity) after full insertion of the wire segment 120, it is ensured that both segments 110 and 120 will reach the required welding temperature at approximately the same time.

The set of pre-welding shape-forming electrodes 100 and the set of welding electrodes 200 of the present invention may be used in resistance welding machines known in the art, such as in line production, which are designed to be used with one or more welding electrodes and/or having a welding head that controls the pressure to be applied to the welding electrode(s). A welding power supply conventionally used for controlling the electric current applied via the welding electrodes may be used in combination with the set pre-welding shape-forming electrodes 100 and/or the set of welding electrodes 200 of the present invention for controlling the currents and potentials applied by the electrodes during the compactation and welding process.

The principles of the present invention may also be advantageously applied for electrically connecting sensors to external circuitry, such as in the automobile industry. Typically, the wire leads coming from a sensor are of a very small gauge. For instance, wire leads with a diameter of less than 0.3 mm are common in sensor devices such as the Dumet thermistor. On the other hand, the equipment interface in the car (or other application) is usually using a much larger diameter (gauge) wire - greater than 0.8mm. The resistance welding of such dissimilar sized components can be very problematic. The welded joint also poses concerns in terms of reliability and lifetime as their stability is particularly challenged by the vibrations in the vehicle. In addition, the materials of the sensor wire can be very different from the wire used for the interconnection in the car. For instance, interconnection interfaces of vehicles commonly have large wires made of a very high Cu content alloy, while the wires used in a sensor may be of a quite different material, such as a glass beaded thermistor with a Dumet wire, which is a copper cladded steel wire.

In conclusion, the principles of the present invention may be advantageously used (but not limited to) in many applications that require forming an electrical interconnection or joint between electrical cables or wires of dissimilar materials, structure and sizes, which is durable and highly reliable. In particular, the present invention may be advantageously used in applications where the relative difference in thickness between two wires of metal alloys to be joined is significantly high. A further technical advantage of the present invention lies in the fact that a highly reliable welded joint is achieved without the need of any additional material(s) during the welding process since the joint of an intermetallic compound may be created from materials which have strong differing melting temperatures and specific resistances. This represents a significant reduction in costs and time savings of the overall welding process. The present invention is also suitable for joining cables/wiring in circuit designs with limited space. Furthermore, due to the relative small volume required by the sets of electrodes of the claimed invention, there can be advantages at further assembly steps, for e.g. for application of insulation materials.

Although certain features of the above exemplary embodiments may have been described using terms such as "bottom", these terms were used for the purpose of facilitating the description of the respective features and their relative orientation only and should not be construed as limiting the claimed invention or any of its components to a particular spatial orientation. For instance, the present invention is not limited to use of the pre-welding shape-forming electrodes 100 illustrated in Figs. 1 - 2 and/or the set of welding electrodes 200 shown in Fig. 3 in the depicted orientations. As an example, the shape-forming electrode 130 and the base electrode 140 may be inverted. Moreover, although the above embodiments were described in the context of the pre-welding shaped wire being a multi-stranded cable, the principles of the present invention are also applicable to other types of wires/cables that are deformable by compression and consequently, suitable for undergoing a pre-welding shape-forming process for embedding a second wire of smaller diameter to be welded, prior to applying a welding current, according to the principles of the present invention.

### Reference Signs

- 10: first wire, multi-stranded wire
- 20: second wire, solid core wire

- 100: set of pre-welding shape-forming electrodes
- 110: first segment of multi-stranded cable
- 111: single strands of multi-stranded cable
- 112: insulation sleeve of multi-stranded cable
- 115: reentrance in pre-welding shaped first segment
- 118a, 118b: reentrance borders, ridges
- 117: base of pre-welding shape
- 120: second segment of second wire
- 130: shape-forming electrode
- 132: contact face of shape-forming electrode
- 134: protrusion
- 136: pre-welding shaping groove
- 138a, 138b: rounded surfaces of groove
- 140: pre-shape compression electrode
- 142: contact face of compression electrode

- 200: set of welding electrodes
- 210: base welding electrode of first subset
- 211a, 211b: compression welding electrodes of first subset
- 210': base welding electrode of second subset
- 211a', 211b': compression welding electrodes of second subset
- 220: base element of set of shaping and insulating elements
- 221: compression element of set of shaping insulating elements

## Claims

1. Apparatus for compact embedded-wire welding of electrical wires, comprising:
a set of pre-welding electrodes (100) adapted to shape a cross-section of a first segment (110) of a first wire (10) with a pre-welding shape which includes a reentrance (115) for accommodating a second segment (120) of a second wire (20) to be welded to the first wire (10),
the set of pre-welding electrodes (100) comprises:
a shape-forming electrode (130) having a contact face (132) with a shape-forming structure adapted to transfer said pre-welding shape with said reentrance to the first segment (110) upon compression of the first segment (110) against said contact face (132);
wherein the shape-forming structure at the contact face (132) of the shape-forming electrode (130) includes a groove (136) with a protrusion (134) at an intermediate position of the groove (136), thereby forming a W-shaped cavity adapted to form parallel ridges on each side of the reentrance (115) of the pre-welding shape, and
wherein said protrusion (134) has a height and width adapted to form said reentrance on the cross-section of the first segment (110) for accommodating the second segment (120) of the second wire (20) and
the apparatus further comprising a set of welding electrodes (200) adapted to apply a welding potential difference between a first position (P1) and a second position (P2) along a longitudinal direction of the first segment (110) for welding the first segment to the second segment arranged in the reentrance (115) of the pre-welding shape.

2. An apparatus according to claim 1, wherein
the set of pre-welding electrodes (100) comprise a base electrode (140) adapted to be positioned on a side of the first segment (110) opposed to the contact face of the shape-forming electrode (130),
the base electrode (140) has a compression face adapted to compress the first segment (110) against the shape-forming structure at the contact face (132) of the shape-forming electrode (130).

3. An apparatus according to claim 2, wherein
the compression face of the base electrode (140) is a flat surface transverse to a direction of compression, or
the compression face includes a depression with parallel ridges that protrude in a direction of compression such as to deform the first segment cross-section towards the shape-forming electrode from the left and right sides with respect to the protrusion (134).

4. An apparatus according to any one of claims 1 to 3,
wherein the set of welding electrodes (200) comprises a first sub-set of welding electrodes (210, 211a, 211b) adapted to be arranged around a cross-section of the first segment (110) at the first position (P1) for applying a first welding potential and to apply inward pressure on said cross-section of the first segment (110) for changing the shape of cross-section at the first position (P1) into a predetermined welding shape.

5. An apparatus according to claim 4, wherein
the first sub-set of welding electrodes (210, 211a, 211b) includes a base welding electrode (210) adapted to load the first segment (110) thereon and one or more compression welding electrodes (211a, 211b) adapted to be arranged around the cross-section at the first position (P1) and movable along respective radial directions so as to apply said inward pressure onto the first segment against the base welding electrode (210).

6. An apparatus according to claim 5, wherein
the first sub-set of welding electrodes (210, 211a, 211b) comprises two compression welding electrodes (211a, 211b), and
the two compression welding electrodes and the base welding electrodes are adapted to be arranged with an angular separation of 120° around the cross-section of the first segment such as to change the pre-welding shape of the first segment cross-section into a triangular welding shape.

7. An apparatus according to claim 5 or 6, wherein
the base welding electrode (210) and/or the compression electrodes (211a, 211b) have contact faces for applying the inward pressure on the first segment (110) which are substantially flat surfaces.

8. An apparatus according to any one of claims 4 to 7, wherein
the set of welding electrodes (200) further comprises a second sub-set of welding electrodes (210', 211a', 211b') adapted to be arranged around a cross-section of the first segment (110) at the second position (P2) for applying a second welding potential and to apply inward pressure on said cross-section at the second position (P2) for changing the shape of said cross-section at the second position (P2) into the predetermined welding shape.

9. An apparatus according to claim 8, wherein
the second sub-set of welding electrodes (210', 211a', 21 1b') comprises welding electrodes that are provided in the same number and shape as the welding electrodes of the first subset (210, 211a, 211b).

10. An apparatus according to claim 8 or 9, wherein
the set of welding electrodes (200) further comprises a set of insulating elements (221, 220) adapted to be arranged around a cross-section of the first segment (110) at an intermediated position (P3) between the first and second sub-sets of welding electrodes, and
the set of insulating elements (221, 220) is provided in number and shape similar to the first and/or second sub-set of electrodes and are adapted to be arranged around the cross-section of the first segment (110) at the intermediate position (P3) so as to apply inward pressure on the first segment for changing the shape of said cross-section into the predetermined welding shape.

11. An apparatus according to any one of the preceding claims, wherein
said protrusion (134) has a height which is twice the diameter of the second wire and/or a width which is equal to or larger than the diameter of the second wire.

12. A method of compact embedded-wire welding of electrical wires, the method comprising steps of:
forming, via compression, a pre-welding shape on a cross-section of a first segment (110) of a first wire (10) that includes a reentrance (115) for accommodating a second segment (120) of a second wire (20) to be welded to the first wire (10);
accommodating said second segment (120) in said reentrance of the pre-welding shape in an alignment with the first segment (110);
applying inward pressure on the pre-shaped cross-section of the first segment (110) so as to change the pre-welding shape of the first segment cross-section into a welding shape in which left and right borders of the reentrance (115) in the pre-welding shape are made to surround, at least partially, a cross-section of the second segment (120) positioned in the reentrance (115) of the pre-welding shape; and
supplying a welding potential difference between first and second positions along a longitudinal length of the first segment (110) for welding the first segment to the second segment (120), wherein the cross-section of the first segment (110) has been changed into the welding shape at the first and/or second positions.

13. The method according to claim 12, further comprising:
loading the first segment (110) in a set of pre-welding shape-forming electrodes (100) of an apparatus according to any of claims 1 to 11 and performing said step of forming the pre-welding shape of the cross-section of the first segment (110) using said set of pre-welding shape-forming electrodes (100); and/or
loading the first segment (110) with the pre-welding shaped cross-section and the second segment accommodated in the reentrance of in the pre-welding shape in a set of welding electrodes (200) of an apparatus according to any of claims 1 to 10, performing said step of applying inward pressure onto the pre-welding shaped cross-section of the first segment for changing the shape of said cross-section into the welding shape, and
supplying said welding potential difference between the first and second positions along the longitudinal length of the first segment (110) using the set of welding electrodes.

14. The method according to claim 12 or 13, wherein:
the first wire (10) is a multi-filament stranded wire; and/or
the second wire (20) is a Dumet wire or an electrical wire of a single solid core; and/or
the cross-section of the second segment (120) of the second wire (20) is smaller than the cross-section of the first segment (110) of the first wire (10).

## Patentansprüche

1. Vorrichtung zum kompakten Schweißen eingebetteter elektrischer Drähte, umfassend:
einen Satz von Vorschweißelektroden (100), die geeignet sind, einen Querschnitt eines ersten Segments (110) eines ersten Drahts (10) mit einer Vorschweißform zu formen, die eine Einbuchtung (115) zur Aufnahme eines zweiten Segments (120) eines zweiten Drahts (20), der mit dem ersten Draht (10) verschweißt werden soll, enthält
der Satz von Vorschweißelektroden (100) umfasst:
eine formgebende Elektrode (130) mit einer Kontaktfläche (132) mit einer formgebenden Struktur, die geeignet ist, die Vorschweißform mit der Einbuchtung auf das erste Segment (110) zu übertragen, wenn das erste Segment (110) gegen die Kontaktfläche (132) gedrückt wird;
wobei die formgebende Struktur an der Kontaktfläche (132) der formgebenden Elektrode (130) eine Nut (136) mit einem Vorsprung (134) an einer Zwischenposition der Nut (136) aufweist, wodurch ein W-förmiger Hohlraum gebildet wird, der dazu geeignet ist, parallele Rippen auf jeder Seite des Wiedereintritts (115) der Vorschweißform zu bilden, und
wobei der Vorsprung (134) eine Höhe und Breite aufweist, die angepasst sind, um die Einbuchtung auf dem Querschnitt des ersten Segments (110) zum Aufnehmen des zweiten Segments (120) des zweiten Drahts (20) zu bilden, und
die Vorrichtung ferner einen Satz von Schweißelektroden (200) umfasst, die angepasst sind, um eine Schweißpotenzialdifferenz zwischen einer ersten Position (P1) und einer zweiten Position (P2) entlang einer Längsrichtung des ersten Segments (110) anzulegen, um das erste Segment mit dem zweiten Segment zu verschweißen, das in der Einbuchtung (115) der Vorschweißform angeordnet ist.

2. Vorrichtung nach Anspruch 1, wobei
der Satz von Vorschweißelektroden (100) eine Basiselektrode (140) umfasst, die so angepasst ist, dass sie auf einer Seite des ersten Segments (110) gegenüber der Kontaktfläche der formgebenden Elektrode (130) positioniert werden kann,
die Basiselektrode (140) eine Kompressionsfläche aufweist, die geeignet ist, das erste Segment (110) gegen die formgebende Struktur an der Kontaktfläche (132) der formgebenden Elektrode (130) zu komprimieren.

3. Vorrichtung nach Anspruch 2, wobei
die Kompressionsfläche der Basiselektrode (140) eine flache Oberfläche quer zu einer Kompressionsrichtung ist, oder
die Kompressionsfläche eine Vertiefung mit parallelen Stegen aufweist, die in Kompressionsrichtung vorstehen, um den ersten Segmentquerschnitt von der linken und rechten Seite in Richtung der formgebenden Elektrode in Bezug auf den Vorsprung (134) zu verformen.

4. Vorrichtung nach einem der Ansprüche 1 bis 3,
wobei der Satz von Schweißelektroden (200) einen ersten Untersatz von Schweißelektroden (210, 211a, 211b) umfasst, die angepasst sind, um einen Querschnitt des ersten Segments (110) an der ersten Position (P1) herum angeordnet zu werden, um ein erstes Schweißpotential anzulegen und um einen Druck nach innen auf den Querschnitt des ersten Segments (110) auszuüben, um die Form des Querschnitts an der ersten Position (P1) in eine vorbestimmte Schweißform zu ändern.

5. Vorrichtung nach Anspruch 4, wobei
der erste Untersatz von Schweißelektroden (210, 211a, 211b) eine Basisschweißelektrode (210) enthält, die dazu geeignet ist, das erste Segment (110) darauf zu laden, und eine oder mehrere Kompressionsschweißelektroden (211a, 211b), die dazu geeignet sind, um den Querschnitt an der ersten Position (P1) herum angeordnet zu werden und entlang entsprechender radialer Richtungen beweglich sind, um den nach innen gerichteten Druck auf das erste Segment gegen die Basisschweißelektrode (210) auszuüben.

6. Vorrichtung nach Anspruch 5, wobei
der erste Untersatz von Schweißelektroden (210, 211a, 211b) zwei Kompressionsschweißelektroden (211a, 211b) umfasst, und
die beiden Kompressionsschweißelektroden und die Basisschweißelektroden mit einem Winkelabstand von 120° um den Querschnitt des ersten Segments angeordnet werden können, um die Vorschweißform des Querschnitts des ersten Segments in eine dreieckige Schweißform zu ändern.

7. Vorrichtung nach Anspruch 5 oder 6, wobei
die Basisschweißelektrode (210) und/oder die Kompressionselektroden (211a, 211b) Kontaktflächen zum Aufbringen des Innendrucks auf das erste Segment (110) aufweisen, die im Wesentlichen ebene Flächen sind.

8. Vorrichtung nach einem der Ansprüche 4 bis 7, wobei
der Satz von Schweißelektroden (200) ferner einen zweiten Untersatz von Schweißelektroden (210', 211a', 211b') umfasst, die so beschaffen sind, dass sie um einen Querschnitt des ersten Segments (110) an der zweiten Position (P2) herum angeordnet werden können, um ein zweites Schweißpotenzial anzulegen und einen nach innen gerichteten Druck auf den Querschnitt an der zweiten Position (P2) auszuüben, um die Form des Querschnitts an der zweiten Position (P2) in die vorgegebene Schweißform zu ändern.

9. Vorrichtung nach Anspruch 8, wobei
der zweite Untersatz von Schweißelektroden (210', 211a', 211b') Schweißelektroden umfasst, die in der gleichen Anzahl und Form wie die Schweißelektroden des ersten Untersatzes (210, 211a, 211b) vorgesehen sind.

10. Vorrichtung nach Anspruch 8 oder 9, wobei
der Satz von Schweißelektroden (200) ferner einen Satz von Isolierelementen (221, 220) umfasst, die geeignet sind, um einen Querschnitt des ersten Segments (110) an einer Zwischenposition (P3) zwischen dem ersten und dem zweiten Teilsatz von Schweißelektroden angeordnet zu werden, und
der Satz von Isolierelementen (221, 220) in Anzahl und Form ähnlich dem ersten und/oder zweiten Untersatz von Elektroden vorgesehen ist und angepasst ist, um den Querschnitt des ersten Segments (110) an der Zwischenposition (P3) angeordnet zu werden, um einen Druck nach innen auf das erste Segment auszuüben, um die Form des Querschnitts in die vorbestimmte Schweißform zu ändern.

11. Vorrichtung nach einem der vorhergehenden Ansprüche, wobei
der Vorsprung (134) eine Höhe hat, die das Doppelte des Durchmessers des zweiten Drahtes beträgt, und/oder eine Breite, die gleich oder größer als der Durchmesser des zweiten Drahtes ist.

12. Verfahren zum kompakten Schweißen eingebetteter elektrischer Drähte, wobei das Verfahren die folgenden Schritte umfasst
Ausbilden einer Vorschweißform auf einem Querschnitt eines ersten Segments (110) eines ersten Drahts (10) durch Kompression, die eine Einbuchtung (115) zur Aufnahme eines zweiten Segments (120) eines zweiten Drahts (20) enthält, der mit dem ersten Draht (10) verschweißt werden soll;
Aufnehmen des zweiten Segments (120) in der Einbuchtung der Vorschweißform in einer Ausrichtung mit dem ersten Segment (110);
Ausüben eines Drucks nach innen auf den vorgeformten Querschnitt des ersten Segments (110), um die Vorschweißform des Querschnitts des ersten Segments in eine Schweißform zu ändern, bei der linke und rechte Ränder der Einbuchtung (115) in der Vorschweißform dazu gebracht werden, einen Querschnitt des zweiten Segments (120), der in der Einbuchtung (115) der Vorschweißform positioniert ist, zumindest teilweise zu umgeben; und
Zuführen einer Schweißpotentialdifferenz zwischen ersten und zweiten Positionen entlang einer Längslänge des ersten Segments (110) zum Verschweißen des ersten Segments mit dem zweiten Segment (120), wobei der Querschnitt des ersten Segments (110) an den ersten und/oder zweiten Positionen in die Schweißform geändert wurde.

13. Verfahren nach Anspruch 12, ferner umfassend:
Laden des ersten Segments (110) in einen Satz von Vorschweiß-Formgebungselektroden (100) einer Vorrichtung nach einem der Ansprüche 1 bis 11 und Ausführen des Schritts des Bildens der Vorschweiß-Form des Querschnitts des ersten Segments (110) unter Verwendung des Satzes von Vorschweiß-Formgebungselektroden (100); und/oder
Laden des ersten Segments (110) mit dem vorgeschweißten geformten Querschnitt und des zweiten Segments, das in der Einbuchtung der Vorschweißform untergebracht ist, in einen Satz Schweißelektroden (200) einer Vorrichtung nach einem der Ansprüche 1 bis 10, Ausführen des Schritts des Ausübens von Druck nach innen auf den vorgeschweißten geformten Querschnitt des ersten Segments, um die Form des Querschnitts in die Schweißform zu ändern, und
Zuführen der Schweißpotentialdifferenz zwischen der ersten und der zweiten Position entlang der Längslänge des ersten Segments (110) unter Verwendung des Satzes von Schweißelektroden.

14. Verfahren nach Anspruch 12 oder 13, wobei:
der erste Draht (10) eine mehrfädige Litze ist; und/oder der zweite Draht (20) ein Dumet-Draht oder ein elektrischer Draht mit einer einzigen massiven Seele ist; und/oder
der Querschnitt des zweiten Segments (120) des zweiten Drahtes (20) kleiner ist als der Querschnitt des ersten Segments (110) des ersten Drahtes (10).

## Revendications

1. Appareil de soudage compact par fil intégré de fils électriques, comprenant :
un ensemble d'électrodes de pré-soudage (100) adaptées pour façonner une section transversale d'un premier segment (110) d'un premier fil (10) avec une forme de pré-soudage qui comprend un renfoncement (115) pour recevoir un deuxième segment (120) d'un deuxième fil (20) à souder au premier fil (10),
l'ensemble d'électrodes de pré-soudage (100) comprend :
une électrode de mise en forme (130) ayant une face de contact (132) avec une structure de mise en forme adaptée pour transférer ladite forme de pré-soudage avec ledit renfoncement au premier segment (110) lors de la compression du premier segment (110) contre ladite face de contact (132) ;
dans lequel la structure de mise en forme au niveau de la face de contact (132) de l'électrode de mise en forme (130) comprend une rainure (136) avec une saillie (134) au niveau d'une position intermédiaire de la rainure (136), formant ainsi une cavité en forme de W adaptée pour former des crêtes parallèles de chaque côté du renfoncement (115) de la forme de pré-soudage, et
dans lequel ladite saillie (134) a une hauteur et une largeur adaptées pour former ledit renfoncement sur la section transversale du premier segment (110) afin de recevoir le deuxième segment (120) du deuxième fil (20) et
l'appareil comprenant en outre un ensemble d'électrodes de soudage (200) adaptées pour appliquer une différence de potentiel de soudage entre une première position (P1) et une deuxième position (P2) le long d'une direction longitudinale du premier segment (110) afin de souder le premier segment au deuxième segment agencé dans le renfoncement (115) de la forme de pré-soudage.

2. Appareil selon la revendication 1, dans lequel
l'ensemble d'électrodes de pré-soudage (100) comprend une électrode de base (140) adaptée pour être positionnée sur un côté du premier segment (110) opposé à la face de contact de l'électrode de mise en forme (130),
l'électrode de base (140) a une face de compression adaptée pour comprimer le premier segment (110) contre la structure de mise en forme au niveau de la face de contact (132) de l'électrode de mise en forme (130).

3. Appareil selon la revendication 2, dans lequel
la face de compression de l'électrode de base (140) est une surface plate transversale à une direction de compression, ou
la face de compression comprend une dépression avec des crêtes parallèles qui font saillie dans une direction de compression de manière à déformer la section transversale du premier segment vers l'électrode de mise en forme depuis les côtés gauche et droit par rapport à la saillie (134).

4. Appareil selon l'une quelconque des revendications 1 à 3,
dans lequel l'ensemble d'électrodes de soudage (200) comprend un premier sous-ensemble d'électrodes de soudage (210, 211a, 211b) adapté pour être agencé autour d'une section transversale du premier segment (110) à la première position (P1)afin d'appliquer un premier potentiel de soudage et pour appliquer une pression vers l'intérieur sur ladite section transversale du premier segment (110) afin de modifier la forme de la section transversale à la première position (P1) en une forme de soudage prédéterminée.

5. Appareil selon la revendication 4, dans lequel
le premier sous-ensemble d'électrodes de soudage (210, 211a, 211b) comprend une électrode de soudage de base (210) adaptée pour charger le premier segment (110) dessus et une ou plusieurs électrodes de soudage par compression (211a, 211b) adaptées pour être agencées autour de la section transversale à la première position (P1) et mobiles le long de directions radiales respectives de manière à appliquer ladite pression vers l'intérieur sur le premier segment contre l'électrode de soudage de base (210).

6. Appareil selon la revendication 5, dans lequel
le premier sous-ensemble d'électrodes de soudage (210, 211a, 211b) comprend deux électrodes de soudage par compression (211a, 211b), et
les deux électrodes de soudage par compression et les électrodes de soudage de base sont adaptées pour être agencées avec une séparation angulaire de 120° autour de la section transversale du premier segment de manière à modifier la forme de pré-soudage de la section transversale du premier segment en une forme de soudage triangulaire.

7. Appareil selon la revendication 5 ou 6, dans lequel
l'électrode de soudage de base (210) et/ou les électrodes de compression (211a, 211b) ont des faces de contact pour appliquer la pression vers l'intérieur sur le premier segment (110) qui sont des surfaces sensiblement plates.

8. Appareil selon l'une quelconque des revendications 4 à 7, dans lequel
l'ensemble d'électrodes de soudage (200) comprend en outre un deuxième sous-ensemble d'électrodes de soudage (210', 211a', 211b') adapté pour être agencé autour d'une section transversale du premier segment (110) à la deuxième position (P2) afin d'appliquer un deuxième potentiel de soudage et pour appliquer une pression vers l'intérieur sur ladite section transversale à la deuxième position (P2) afin de modifier la forme de ladite section transversale à la deuxième position (P2) en la forme de soudage prédéterminée.

9. Appareil selon la revendication 8, dans lequel
le deuxième sous-ensemble d'électrodes de soudage (210', 211a', 211b') comprend des électrodes de soudage qui sont prévues dans le même nombre et la même forme que les électrodes de soudage du premier sous-ensemble (210, 211a, 211b).

10. Appareil selon la revendication 8 ou 9, dans lequel
l'ensemble d'électrodes de soudage (200) comprend en outre un ensemble d'éléments isolants (221, 220) adaptés pour être agencés autour d'une section transversale du premier segment (110) à une position intermédiaire (P3) entre les premier et deuxième sous-ensembles d'électrodes de soudage, et
l'ensemble d'éléments isolants (221, 220) est prévu en nombre et en forme similaires au premier et/ou au deuxième sous-ensemble d'électrodes et est adapté pour être agencé autour de la section transversale du premier segment (110) à la position intermédiaire (P3) de manière à appliquer une pression vers l'intérieur sur le premier segment pour modifier la forme de ladite section transversale en la forme de soudage prédéterminée.

11. Appareil selon l'une quelconque des revendications précédentes, dans lequel
ladite saillie (134) a une hauteur qui est deux fois le diamètre du deuxième fil et/ou une largeur qui est supérieure ou égale au diamètre du deuxième fil.

12. Procédé de soudage compact par fil intégré de fils électriques, le procédé comprenant les étapes consistant à :
former, par compression, une forme de pré-soudage sur une section transversale d'un premier segment (110) d'un premier fil (10) qui comprend un renfoncement (115) pour recevoir un deuxième segment (120) d'un deuxième fil (20) à souder au premier fil (10) ;
recevoir ledit deuxième segment (120) dans ledit renfoncement de la forme de pré-soudage en alignement avec le premier segment (110) ;
appliquer une pression vers l'intérieur sur la section transversale préformée du premier segment (110) de manière à modifier la forme de pré-soudage de la section transversale du premier segment en une forme de soudage dans laquelle les bordures gauche et droite du renfoncement (115) dans la forme de pré-soudage sont réalisées pour entourer, au moins partiellement, une section transversale du deuxième segment (120) positionné dans le renfoncement (115) de la forme de pré-soudage ; et
fournir une différence de potentiel de soudage entre des première et deuxième positions le long d'une longueur longitudinale du premier segment (110) pour souder le premier segment au deuxième segment (120), où la section transversale du premier segment (110) a été modifiée en la forme de soudage aux première et/ou deuxième positions.

13. Procédé selon la revendication 12, comprenant en outre :
charger le premier segment (110) dans un ensemble d'électrodes de mise en forme de pré-soudage (100) d'un appareil selon l'une des revendications 1 à 11 et effectuer ladite étape de formation de la forme de pré-soudage de la section transversale du premier segment (110) en utilisant ledit ensemble d'électrodes de mise en forme de pré-soudage (100) ; et/ou
charger le premier segment (110) avec la section transversale mise en forme de pré-soudage et le deuxième segment reçu dans le renfoncement de la forme de pré-soudage dans un ensemble d'électrodes de soudage (200) d'un appareil selon l'une des revendications 1 à 10, effectuer ladite étape d'application d'une pression vers l'intérieur sur la section transversale mise en forme de pré-soudage du premier segment pour modifier la forme de ladite section transversale en la forme de soudage, et
fournir ladite différence de potentiel de soudage entre les première et deuxième positions le long de la longueur longitudinale du premier segment (110) en utilisant l'ensemble d'électrodes de soudage.

14. Procédé selon la revendication 12 ou 13, dans lequel :
le premier fil (10) est un fil toronné multifilament ; et/ou
le deuxième fil (20) est un fil Dumet ou un fil électrique d'une seule âme solide ; et/ou
la section transversale du deuxième segment (120) du deuxième fil (20) est inférieure à la section transversale du premier segment (110) du premier fil (10).
